# FASCICULE DE BREVET EUROPEEN

(11) **EP 0 914 994 B1**
(45) Date de publication et mention de la délivrance du brevet: **16.04.2003**
(21) Numéro de dépôt: 98203621.2
(22) Date de dépôt: 27.10.1998
(51) Int. Cl.: B60R 25/04, H04Q 7/32

(54) **Procédé antivol pour véhicule, utilisant un téléphone portable**
Diebstahlsicherungsverfahren für Kraftfahrzeuge unter Verwendung eines tragbaren Telefons
Anti-theft method for vehicle using a portable telephone

(30) Priorité: 04.11.1997 FR 9713850
(43) Date de publication de la demande: 12.05.1999
(73) Titulaire: Cellon France SAS, 72100 Le Mans (FR)
(72) Inventeur: Charron, Didier, 75008 Paris (FR)
(74) Mandataire: Kohn, Philippe

(56) Documents cités:
- EP-A- 0 517 336
- DE-A- 4 244 468
- US-A- 5 225 713

## Description

L'invention concerne un procédé antivol pour véhicule doté de moyens de démarrage, ledit procédé comportant une étape de blocage/déblocage desdits moyens de démarrage et utilisant un téléphone portable. L'invention concerne également un téléphone portable pour la mise en oeuvre dudit procédé et un élément de fixation d'un tel téléphone portable à un véhicule.

Un procédé et un téléphone selon les preambules des revendications independantes sont connus du document US 5,225,713.

Le brevet US 5,225,713 décrit un appareil qui permet d'empêcher le démarrage d'un véhicule lorsque son utilisation n'est pas autorisée. Cet appareil est contrôlé par les fréquences DTMF générées par un téléphone cellulaire lorsque l'utilisateur compose un numéro. L'appareil compare les fréquences générées à une séquence de fréquences pré-enregistrée et décide, en réponse à cette comparaison, de bloquer ou de débloquer les moyens de démarrage du véhicule.

L'utilisateur est donc obligé de composer son code sur son téléphone cellulaire à chaque démarrage du véhicule, ce qui est fastidieux.

L'invention a notamment pour but de proposer un procédé antivol qui ne présente pas cet inconvénient.

Pour cela, un procédé antivol selon l'invention et tel que décrit dans le paragraphe introductif est caractérisé en ce qu'il comporte une étape de contrôle d'au moins une caractéristique dudit téléphone mise en oeuvre automatiquement lors de la connexion du téléphone au véhicule.

D'autres particularités, détails et avantages de l'invention apparaîtront à la lumière de la description qui va suivre en regard des dessins annexés qui donnés à titre d'exemple non limitatif et dans lesquels:
- les figures 1 et 2 représentent un téléphone selon l'invention,
- la figure 3 représente différentes étapes pour la mise en oeuvre d'un procédé antivol selon l'invention,
- la figure 4 représente différentes étapes pour l'initialisation, la modification et l'activation/la désactivation d'un procédé antivol selon l'invention,
- la figure 5 représente schématiquement un circuit de principe de démarrage d'un véhicule, et un élément de fixation d'un téléphone à ce véhicule.

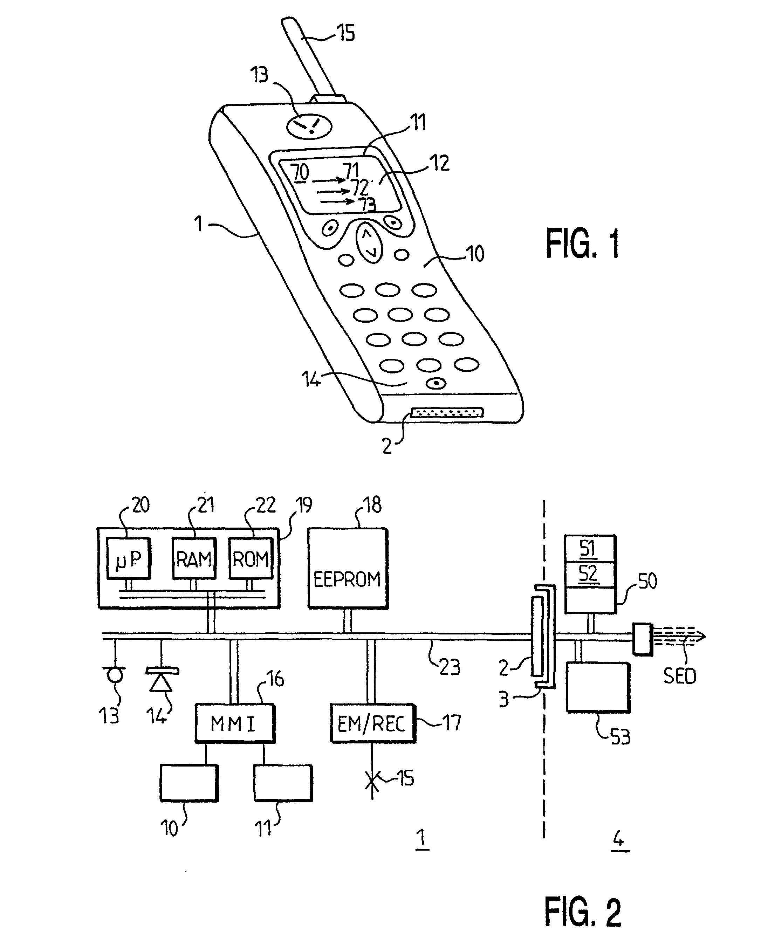

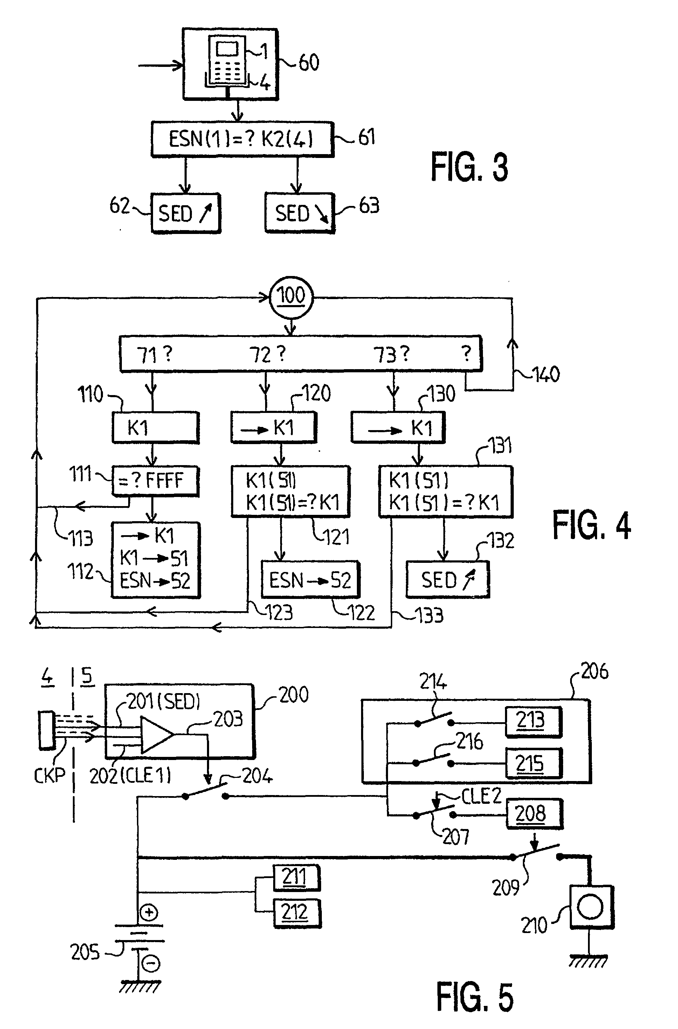

Sur les figures 1 et 2, on a représenté schématiquement un téléphone portable et un élément de fixation selon l'invention. Le téléphone 1 comporte un connecteur femelle 2 destiné à se connecter sur un connecteur mâle 3 de l'élément de fixation 4 qui est destiné à être monté dans un véhicule 5 pour recevoir le téléphone 1 (voir figure 4). Le téléphone 1 comporte également un clavier 10, un écran 11 permettant notamment d'afficher un menu 12 d'utilisation du téléphone, un écouteur 13, un microphone 14, une antenne 15. Le clavier 10 et l'écran 11 sont reliés à un circuit 16 de gestion de l'interface homme/machine du téléphone. L'antenne 15 est reliée à une circuit d'émission/réception 17. Le téléphone 1 comporte également une mémoire EEPROM 18 et un ensemble à microprocesseur 19 qui contient un microprocesseur proprement dit 20, une mémoire vive (ou RAM) 21, et une mémoire morte (ou ROM) 22. La mémoire morte 22 contient notamment les instructions habituelles permettant d'assurer le fonctionnement du téléphone ainsi que des instructions pour la mise en oeuvre de l'invention. Le connecteur 2, l'écouteur 13, le microphone 14, les circuits 16 et 17, la mémoire EEPROM 18, et l'ensemble à microprocesseur 19 sont connectés à un bus 23.

L'élément de fixation 4 comporte une mémoire 50 dotée d'au moins deux emplacements 51 et 52 destinés à stocker un code K1 choisi par l'utilisateur d'une part et une caractéristique du téléphone K2 d'autre part. Le code K1 est un code de sécurité utilisé pour vérifier l'identité de l'utilisateur du téléphone avant toute modification des paramètres du procédé selon l'invention. La caractéristique K2 est par exemple constituée par le numéro ESN du téléphone (de l'anglais Electrical Serial Number c'est-à-dire numéro de série électrique), lorsqu'il s'agit d'un téléphone analogique, ou par son numéro IMEI (de l'anglais International Mobile Equipement Identity c'est-à-dire Identité internationale de l'équipement mobile) pour un téléphone numérique. Ce numéro est attribué au téléphone par le constructeur et permet de l'identifier de façon unique au monde. L'élément de fixation 4 délivre au véhicule 5 une information SED qui est utilisée par le véhicule 5 pour bloquer/débloquer le démarrage du véhicule (voir figure 5) et qui est déterminée par le téléphone de la façon suivante (voir figure 3): pour démarrer le véhicule, l'utilisateur doit placer son téléphone portable dans l'élément de fixation 4 (étape 60). Le téléphone compare alors son numéro ESN ou IMEI avec celui qui est mémorisé à l'emplacement 52 (étape 61). S'ils sont égaux, il délivre un signal SED actif (étape 62). Sinon, il délivre un signal SED inactif (étape 63).

Sur la figure 2, on a regroupé dans une boîte 53 les fonctions usuelles d'un élément de fixation 4, notamment la commutation de la voix sur un haut-parleur et un micro externes montés sur le véhicule. Ces fonctions n'interviennent pas dans l'invention et n'ont donc pas à être décrite plus en détails ici.

Conformément à l'invention, le menu 12 contient notamment une rubrique "antivol" 70 qui permet à l'utilisateur d'installer puis de modifier les paramètres d'un procédé selon l'invention. Cette rubrique 70 contient dans l'exemple qui est décrit ici les trois entrées suivantes:
-> 71: initialisation
-> 72: modification
-> 73: activation/désactivation.

L'utilisateur est susceptible de sélectionner l'une de ces trois entrées. Le téléphone (préalablement connecté à l'élément de fixation 4) réalise alors les opérations suivantes qui sont résumées sur la figure 4:
- 100: le téléphone est en attente.
- 101: lorsque l'utilisateur effectue une opération, on détermine si cette opération correspond à la sélection de l'une des entrées 71, 72 ou 73.

### Sélection de l'entrée 71 pour initialiser le procédé antivol:

- 110: lecture des valeurs de K1 et de K2 stockées aux emplacements 51 et 52 de la mémoire 50.
- 111: comparaison des valeurs lues à la valeur par défaut FFFF (en hexadécimales) qui est enregistrée dans la mémoire aux emplacements 51 et 52 avant la première initialisation.
- 112: si les valeurs lues sont égales à FFFF: demander à l'utilisateur de saisir un code de son choix; puis écrire automatiquement dans la mémoire 50, à l'emplacement 51 le code saisi, et à l'emplacement 52 la caractéristique ESN ou IMEI du téléphone.
- 113: sinon, retour à l'étape 100.

### Sélection de l'entrée 72 pour modifier la caractéristique mémorisée:

- 120: demander à l'utilisateur de saisir son code.
- 121: lire le code stocké à l'emplacement 51 et le comparer au code saisi.
- 122: s'ils sont identiques, écrire automatiquement dans la mémoire 50, à l'emplacement 52 la caractéristique ESN ou IMEI du téléphone qui est connecté à l'élément de fixation 4.
- 123: s'ils sont différents, aucune modification n'est effectuée et le fonctionnement reprend à l'étape 100.

### Sélection de l'entrée 73 pour désactiver le procédé antivol:

- 130: demander à l'utilisateur de saisir son code.
- 131: lire le code stocké à l'emplacement 51 et le comparer au code saisi.
- 132: s'ils sont identiques, désactiver le procédé antivol en forçant la sortie SED de l'élément de fixation.
- 123: s'ils sont différents, le procédé n'est pas désactivé et le fonctionnement reprend à l'étape 100.

### Autre opération:

- 140: le fonctionnement reprend à l'étape 100.

Sur la figure 5 on a représenté un schéma de principe d'un circuit de démarrage d'un véhicule. Ce circuit comporte une porte logique ET 200 qui reçoit sur une première entrée 201 le signal SED délivré en sortie de l'élément de fixation 4, et sur une seconde entrée 202 un signal CLE1 qui est inactif lorsque la clé de contact du véhicule est dans une première position dite position d'arrêt, et qui est actif lorsqu'elle est dans une seconde position dite position de repos et dans une troisième position dite position de démarrage. Une sortie 203 de la porte 200 commande un premier interrupteur 204 qui, lorsqu'il est fermé, met en contact une batterie 205 avec un circuit 206 dit circuit de repos d'une part, et avec un second interrupteur 207 d'autre part. L'interrupteur 207 est commandé par un signal CLE2 qui est actif lorsque la clé de contact du véhicule est dans la position de démarrage. Lorsque les interrupteurs 204 et 207 sont fermés, la batterie 205 est mise en contact avec un relais 208 qui commande un troisième interrupteur 209. L'interrupteur 209, lorsqu'il est fermé, met en contact la batterie 205 et un système de démarrage 210. Par ailleurs, la batterie 205 est en contact permanent avec divers circuits, par exemple avec un circuit d'horloge 211, et un circuit d'alarme 212. Le circuit de repos 206 comporte différents circuits montés en parallèle et commandés par des interrupteurs. A titre d'exemple on a représenté sur la figure 5 un circuit 213 de phares qui est commandés par un interrupteur 214, et un circuit d'autoradio 215 qui est commandé par un interrupteur 216.

Le système de démarrage du véhicule n'est débloqué que lorsque le signal SED délivré sur l'entrée 201 de la porte 200 est actif. Lorsqu'il est inactif, l'interrupteur 204 est toujours ouvert: le système de démarrage 210 n'est donc pas mis en contact avec la batterie 205 lorsque l'utilisateur place sa clé en position démarrage. Ainsi, les moyens de démarrage du véhicule sont bloqués.

Dans un autre mode de réalisation avantageux, l'élément de fixation 4 transmet au véhicule une information CKP en plus de l'information SED. Cette information CKP indique la présence ou l'absence de l'élément de fixation 4. Elle est portée sur une troisième entrée de la porte logique 200, de telle sorte que le véhicule ne puisse être démarré en l'absence de l'élément de fixation 4. Ainsi, un fraudeur ne peut pas désactiver le procédé antivol selon l'invention en déconnectant l'élément de fixation 4 du véhicule 5.

Dans un autre mode de réalisation, ce résultat peut être obtenu par des moyens mécaniques qui empêche de déconnecter l'élément de fixation 4 (par exemple, on peut prévoir qu'il ne soit pas possible de démonter l'élément de fixation sans casser des broches de contact).

Dans un autre mode de réalisation enfin, les vérifications portant sur le code de sécurité K1 et sur le numéro de série K2 sont mises en oeuvre par l'élément de fixation 4 au lieu de l'être par le téléphone 1. Ce mode de réalisation est toutefois moins avantageux puisqu'il implique de doter l'élément de fixation de moyens de traitement spécifiques. Dans le mode de réalisation préférentiel qui a été décrit précédemment, on utilise les moyens de traitement du téléphone.

## Revendications

1. Procédé antivol pour véhicule (5) doté de moyens de démarrage (210), ledit procédé comportant une étape (62/63) de blocage/déblocage desdits moyens de démarrage et utilisant un téléphone portable (1), **caractérisé en ce qu'**il comporte une étape (61) de contrôle d'au moins une caractéristique (K2) dudit téléphone mise en oeuvre automatiquement lors de la connexion (60) du téléphone au véhicule.

2. Procédé antivol selon la revendication 1, **caractérisé en ce que** ladite caractéristique (K2) est un numéro d'identification du téléphone.

3. Procédé antivol selon l'une des revendications 1 ou 2, **caractérisé en ce qu'**il est susceptible d'être désactivé (73) après saisie d'un code secret initialement mémorisé dans le véhicule.

4. Procédé selon l'une des revendications 1 à 3, **caractérisé en ce qu'**il comporte notamment une étape (112) de mémorisation, dans le véhicule, de la caractéristique du téléphone, au cours d'une phase d'initialisation (71), puis, avant de démarrer le véhicule:
- une étape (60) de connexion du téléphone au véhicule,
- une étape (61) de comparaison de la caractéristique du téléphone connecté avec celle qui est mémorisée dans le véhicule,
- une étape (62/63) de blocage/déblocage en réponse à ladite comparaison.

5. Procédé antivol selon la revendication 4, **caractérisé en ce que** la caractéristique mémorisée dans le véhicule est susceptible d'être modifiée (72) après saisie d'un code secret (K1).

6. Téléphone portable comportant une mémoire dans laquelle est stockée une caractéristique propre audit téléphone portable, **caractérisé en ce qu'**il comporte :
- des moyens pour lire une caractéristique stockée dans un véhicule doté de moyens de démarrage, lorsque ledit téléphone portable est connecté audit véhicule,
- des moyens pour comparer la caractéristique lue dans ledit véhicule avec la caractéristique stockée dans la mémoire dudit téléphone portable,
- des moyens pour générer un signal de déblocage desdits moyens de démarrage lorsque les caractéristiques comparées sont identiques.

7. Elément de fixation (4) d'un téléphone portable (1) à un véhicule (5), **caractérisé en ce qu'**il comporte une mémoire (50) destinée à mémoriser une caractéristique (K2) dudit téléphone pour la mise en oeuvre du procédé selon l'une des revendications 1 à 5.

8. Elément de fixation selon la revendication 7, **caractérisé en que** ladite mémoire est également destinée à mémoriser un code secret (K1) pour la mise en oeuvre dudit procédé.

## Patentansprüche

1. Antidiebstahlverfahren für Kraftfahrzeug (5), welches mit Mitteln zum Anlassen (210) versehen ist, welches Verfahren einen Schritt (62/63) zur Sperrung/Freigabe der Mittel zum Anlassen aufweist und ein tragbares Telefon (1) verwendet, **dadurch gekennzeichnet, dass** es einen Schritt (61) zur Kontrolle wenigstens einer Eigenschaft (K2) des Telefons umfasst, welcher automatisch beim Anschluss (60) des Telefons ans Kraftfahrzeug ausgeführt wird,.

2. Antidiebstahlverfahren nach Anspruch 1, **dadurch gekennzeichnet, dass** die Eigenschaft (K2) eine Nummer zur Identifizierung des Telefons ist.

3. Antidiebstahlverfahren nach einem der Ansprüche 1 oder 2, **dadurch gekennzeichnet, dass** es nach Erfassen eines in dem Kraftfahrzeug anfänglich gespeicherten Geheimcodes deaktiviert (73) werden kann.

4. Antidiebstahlverfahren nach einem der Ansprüche 1 bis3, **dadurch gekennzeichnet, dass** es insbesondere einen Schritt (112) zur Speicherung der Eigenschaft des Telefons in dem Kraftfahrzeug während einer Initialisierungsphase (71) umfasst, dann, vor dem Anlassen des Kraftfahrzeugs:
- einen Schritt (60) zum Anschluss des Telefons an das Kraftfahrzeug,
- einen Schritt (61) zum Vergleich der Eigenschaft des angeschlossenen Telefons mit jener, die in dem Kraftfahrzeug gespeichert ist,
- einen Schritt (62/63) zur Sperrung/Freigabe in Antwort auf den Vergleich.

5. Antidiebstahlverfahren nach Anspruch 4, **dadurch gekennzeichnet, dass** die in dem Kraftfahrzeug gespeicherte Eigenschaft nach Erfassen eines Geheimcodes (K1) modifiziert (72) werden kann.

6. Tragbares Telefon mit einem Speicher, in welchem eine dem tragbaren Telefon eigene Eigenschaft gespeichert ist, **dadurch gekennzeichnet, dass** es umfasst:
- Mittel zum Einlesen einer Eigenschaft, die in einem mit Mitteln zum Anlassen versehenen Kraftfahrzeug gespeichert ist, wenn das tragbare Telefon mit dem Kraftfahrzeug verbunden ist,
- Mittel zum Vergleichen der in dem Kraftfahrzeug eingelesenen Eigenschaft mit der in dem Speicher des tragbaren Telefons gespeicherten Eigenschaft,
- Mittel zum Erzeugen eines Signals zur Freigabe der Mittel zum Anlassen, wenn die verglichenen Eigenschaften identisch sind.

7. Element zur Befestigung (4) eines tragbaren Telefons (1) an einem Kraftfahrzeug (5), **dadurch gekennzeichnet, dass** es einen Speicher (50) aufweist, welcher eine Eigenschaft (K2) des Telefons zur Durchführung des Verfahrens nach einem der Ansprüche 1 bis 5 speichern soll.

8. Befestigungselement nach Anspruch 7, **dadurch gekennzeichnet, dass** der Speicher gleichermaßen einen Geheimcode (K1) zur Durchführung des Verfahrens speichern soll.

## Claims

1. An anti-theft method for a vehicle (5) with starter means (210), said method comprising a blocking/unblocking step (62/63) of said starter means and utilising a portable telephone (1), **characterised in that** it comprises a verification step (61) for verifying at least one characteristic (K2) of said telephone automatically used during the time the telephone is connected (60) to the vehicle.

2. An anti-theft method according to claim 1, **characterised in that** said characteristic (K2) is an identification number of the telephone.

3. An anti-theft method according to one of the claims 1 or 2, **characterised in that** it may be deactivated (73) after a secret code initially stored in the vehicle has been dialled.

4. A method according to one of claims 1 to 3, **characterised in that** it notably comprises a storing step (112) for storing the telephone characteristic in the vehicle during an initialisation phase (71), and then, before the vehicle is started :
- a step (60) for connecting the telephone to the vehicle,
- a step (61) for comparing the characteristic of the connected telephone with that which is stored in the vehicle,
- a step (62/63) for blocking/unblocking in response to said comparison.

5. An anti-theft method according to claim 4, **characterised in that** the characteristic stored in the vehicle may be modified (72) after the secret code (K1) has been dialled.

6. A portable telephone comprising a memory in which a characteristic, identifying the said portable telephone, is stored, **characterised in that** it comprises:
- means for reading a characteristic stored in a vehicle equipped with starter means, when said portable telephone is connected to said vehicle,
- means for comparing the characteristic read in said vehicle with the characteristic stored in the memory of the said portable telephone,
- means for generating an unblocking signal of said starter means when the compared characteristics are identical.

7. A fastener element (4) for fastening a portable telephone (1) to a vehicle (5) **characterised in that** it comprises a memory (50) intended to store a characteristic (K2) of the telephone for implementing the method according to claims 1 to 5.

8. A fastener element according to claim 7, **characterised in that** said memory is also intended to store a secret code (K1) for implementing said method.
